# EUROPÄISCHE PATENTSCHRIFT

(11) **EP 0 907 599 B1**
(45) Veröffentlichungstag und Bekanntmachung des Hinweises auf die Patenterteilung: **05.01.2000**
(21) Anmeldenummer: 97919324.0
(22) Anmeldetag: 09.04.1997
(51) Int. Cl.: B65G 63/00

(54) **VERFAHREN UND VORRICHTUNG ZUM BESTÜCKEN UND VERLADEN VON TRANSPORTEINHEITEN**
PROCESS AND DEVICE FOR LOADING AND UNLOADING TRANSPORT UNITS
PROCEDE ET DISPOSITIF POUR CHARGER ET DECHARGER DES UNITES DE TRANSPORT

(30) Priorität: 17.04.1996 DE 19615073
(43) Veröffentlichungstag der Anmeldung: 14.04.1999
(73) Patentinhaber: Deutsche Rockwool Mineralwoll-GmbH, 45966 Gladbeck (DE)
(72) Erfinder: BARTEL, Frank-Christian, D-45964 Gladbeck (DE); GRADISCHER, Werner, D-47506 Neukirchen-Vluyn (DE); FRANKE, Ulrich, Johannes, D-44803 Bochum (DE)
(74) Vertreter: Wanischeck-Bergmann, Axel
(86) Internationale Anmeldenummer: EP9701750
(87) Internationale Veröffentlichungsnummer: WO9738931

(56) Entgegenhaltungen:
- BE-A- 455 962
- DE-A- 2 029 636
- DE-A- 2 352 176
- US-A- 2 379 094

## Beschreibung

Die Erfindung betrifft ein Verfahren und eine Vorrichtung zum Bestücken und Verladen von auf Transportmedien, wie Lastkraftwagen und / oder schienengebundenen Fahrzeugen, Schiffen od. dgl. auf- und absetzbaren Transporteinheiten, beispielsweise Wechselbrücken, Containern od. dgl., bei welchem bzw. bei welcher zu kommissionierende Waren, insbesondere palettierte Ware, Paket- und / oder Rollenware, vorzugsweise großvolumiger Ausgestaltung, wie Steinwolleprodukte od. dgl. verladen wird.

Bei der Herstellung von Steinwolleprodukten, die insbesondere zur Wärme- und Schalldämmung bei Gebäuden verwendet werden, werden aus einer Grundcharge durch chemische Zusätze sowie durch unterschiedliche Produktionshöhen eine Reihe von unterschiedlichen Waren gefertigt. Es handelt sich hierbei um eine Linien- /Fliesproduktion, bei der aus wirtschaftlichen Gründen immer nur ein Artikel pro Produktionslinie in einer bestimmten Zeiteinheit hergestellt wird. Eine derartige Zeiteinheit beträgt beispielsweise 24 Stunden. Um die Anforderung der Abnehmer nach einer schnellen Bereitstellung der notwendigen Waren zu erfüllen, sind die Hersteller derartiger Produkte verpflichtet, Liefergarantien, d. h. Lieferungen innerhalb einer kurzen Zeit, beispielsweise innerhalb von 48 Stunden zu gewährleisten. In dieser Zeit müssen die Produkte bzw. Waren hergestellt, verladen und an den Kunden ausgeliefert werden. Da die Produktion fast vollständig auf den Auftrag des Kunden bezogen ist, müssen Kundenaufträge zu Produktionslosen zusammengefaßt werden, gefertigte Produktionslose müssen aufgebrochen werden und je nach Transportart, Transportroute od. dgl. in unterschiedliche Verladeeinheiten (Lastkraftwagen oder Bahnwaggons od. dgl.) kommissioniert werden. Derartige Waren werden entweder palettiert oder in Form von Paket- und / oder Rollenwaren für die Verladung bereitgestellt. Für den Transport dieser Waren haben sich insbesondere solche Transporteinheiten als vorteilhaft erwiesen, die fahrzeugunabhängig gehandhabt werden können. Beispielsweise werden diese Waren in Containern, Wechselbrücken oder anderen Transporteinheiten verladen, welche dann entweder auf einen Lastkraftwagen oder einen Bahnwaggon oder ein Schiff verladen werden. Vorteil dieser Transporteinheiten ist, daß das die Transporteinheit transportierende Fahrzeug während des Verladens der Waren in den Transporteinheiten nicht bereitgestellt werden muß. In dieser Zeit kann das Fahrzeug anderen Transportaufgaben dienen.

Ausgehend von diesem Stand der Technik liegt der Erfindung die **Aufgabe** zugrunde, ein Verfahren und eine Vorrichtung zu schaffen, mit welchem bzw. mit welcher ein schneller Warenumschlag von der Produktion auf verschiedene Transportmittel, insbesondere ohne Zwischenlagerung der Waren in Gebäuden möglich ist.

Als **Lösung** dieser Aufgabenstellung ist seitens des Verfahrens vorgesehen, daß die Waren ohne Zwischenlagerung der Produktion entnommen und einer Bestückungs- und Verladeeinrichtung zugeführt werden, in welcher die Waren direkt in die Transporteinheiten gefördert werden, wobei die Transporteinheiten in zumindest zwei übereinander angeordneten Horizontalebenen angeordnet und bestückt werden.

Seitens der erfindungsgemäßen Vorrichtung ist zur **Lösung** dieser Aufgabenstellung vorgesehen, daß diese Vorrichtung mehrere, in zumindest in zwei übereinanderliegend angeordneten Horizontalebenen vorgesehene Verladestellen hat, vor denen die Transporteinheiten abstellbar sind.

Wesentlicher Vorteil der vorliegenden Erfindung ist, daß die Waren aus der Produktion direkt in die Transporteinheiten gefördert werden und in diesen Transporteinheiten kommissioniert werden. Hierbei spielt eine besondere Rolle, daß die Tranporteinheiten in zumindest zwei übereinander angeordneten Horizontalebenen angeordnet und bestückt werden, wodurch die Gesamtfläche zur Vorhaltung von Transporteinheiten im direkten Ladevorgang verringert wird.

Nach einem weiteren Merkmal des erfindungsgemäßen Verfahrens ist vorgesehen, daß die Transporteinheiten in einer Bevorratungseinrichtung vorgehalten und nach Bedarf der Bestückungs- und Verladeeinrichtung zugeführt werden. Eine derartige Bevorratungseinrichtung kann beispielsweise ein Abstellplatz sein, auf welchem die Transporteinheiten abgestellt werden, nachdem sie an zentraler Stelle von dem Transportmedium abgehoben worden sind.

Es ist ferner bei dem erfindungsgemäßen Verfahren vorgesehen, daß die Transporteinheiten sowohl in leerem als auch zumindest teilweise gefülltem Zustand in der Bevorratungseinrichtung vorgehalten werden. Demzufolge kann bei dem erfindungsgemäßen Verfahren auf ein Zwischenlager (Lagergebäude) verzichtet werden. Die Waren werden nach der Produktion unverzüglich in die bereitgestellten Transporteinheiten gefördert. Sollten Waren produziert worden sein, die nicht unmittelbar an die Kunden ausgeliefert werden, so werden diese überzähligen Waren in Transporteinheiten vorgehalten, so daß sie ggf. in der Bestückungs- und Verladeeinrichtung erneut aus den Transporteinheiten entnommen werden können, um anschließend entsprechend des Kommissionierplans einer anderen Transporteinheit oder anderen Transporteinheiten zugefördet werden zu können. Die teilweise mit Waren befüllten Transporteinheiten, welche nicht unmittelbar ausgeliefert werden, werden in der Bevorratungseinrichtung vorgehalten, so daß die Transporteinheiten als Zwischenlager nutzbar sind, ohne daß hierfür Gebäude vorgesehen werden müssen.

Die Transporteinheiten werden vorzugsweise in regelmäßigen Abständen zueinander und übereinander gestapelt vorgehalten, so daß die Logistik für die Vorhaltung der Transporteinheiten insbesondere dann vereinfacht werden kann, wenn die Transporteinheiten nicht nur im leeren Zustand, sondern auch in teilweise befülltem Zustand vorgehalten werden müssen. Das Übereinanderstapeln der Transporteinheiten hat darüberhinaus den weiteren Vorteil, daß eine Vielzahl von Transporteinheiten auf einer relativ geringen Fläche vorgehalten werden können. Hierbei hat es sich als vorteilhaft erwiesen, die teilweise befüllten Transporteinheiten in einem bestimmten Abschnitt der Bevorratungseinrichtung vorzuhalten, wobei diese Transporteinheiten möglichst in oberen Ebenen der übereinandergestapelten Transporteinheiten vorgehalten werden.

Nach einem weiteren Merkmal des erfindungsgemäßen Verfahrens ist vorgesehen, daß die Transporteinheiten mit einer vorzugsweise als Portalkran ausgebildeten Hub- und Versetzeinrichtung zwischen der Bestückungs- und Verladeeinrichtung und der Bevorratungseinrichtung hin- und herbewegt bzw. auf die Transportmedien verladen werden. Mit einem derartigen Portalkran können sowohl die nebeneinanderliegenden Verladestellen als auch die in zwei Horizontalebenen übereinander angeordneten Verladestellen in einfacher Weise erreicht und bedient werden, wobei der Portalkran weiterhin den Vorteil hat, daß er die gesamte Bevorratungseinrichtung mit den dort abgestellten Transporteinheiten erreichen kann. Die Hub- und Versetzeinrichtung dient somit sowohl der Entnahme von leeren oder teilweise gefüllten Transporteinheiten, welche in den Bereich der Bestückungs- und Verladeeinrichtung transportiert werden müssen, als auch dem Be- und Entladen der Transportmedien, die entweder leere Transporteinheiten anliefern oder mit befüllten Transporteinheiten den Transport zum Kunden durchführen.

Vorzugsweise werden die Transporteinheiten, nämlich die Wechselbrücken, sowohl im Bereich der Bevorratungseinrichtung als auch im Bereich der Bestückungs- und Verladeeinrichtung ebenerdig, d. h. ohne ausgeklappte Stützen abgestellt. Hieraus ergeben sich insbesondere Vorteile hinsichtlich des notwendigen Zeitbedarfs und der Arbeitssicherheit beim Auf- und Abbrücken der Transporteinheiten. Bei einem gattungsgemäßen Verfahren nach dem Stand der Technik ist es notwendig, daß die Transportmedien, nämlich die Lastkraftwagen, die Wechselbrücken in den Bereich vor die Verladestellen der Bestückungs- und Verladeeinrichtung rangieren, wo die Wechselbrücken dann vom Lastkraftwagen abgebrückt werden. Hierbei werden die Wechselbrücken auf ihre ausgeklappten Stützen gestellt, bevor der Lastkraftwagen unterhalb der Wechselbrücke herausgefahren werden kann. Demzufolge muß jede einzelne Wechselbrücke in diesem Bereich der Bestückungs- und Verladeeinrichtung per Lastkraftwagen zugeführt werden. Darüberhinaus ist es nicht möglich, die Wechselbrücken auf ausgeklappten Stützen übereinander zu stapeln. Diese Nachteile werden mit dem erfindungsgemäßen Verfahren vermieden. Beim erfindungsgemäßen Verfahren werden die Wechselbrücken an zentraler Stelle von den Lastkraftwagen abgehoben und entweder im Bereich der Bevorratungseinrichtung oder direkt im Bereich der Bestückungs- und Verladeeinrichtung zur Bestückung abgestellt, wobei das Übereinanderstapeln von Wechselbrücken durch eine entsprechende Konstruktion der Wechselbrücken und durch die erfindungsgemäße Vorgehensweise möglich ist.

Es ist nach einem weiteren Merkmal der Erfindung vorgesehen, daß die Waren in die Bestückungs- und Verladeeinrichtung über Förderbänder in die verschiedenen Horizontalebenen gefördert werden, von welchen Förderbändern die Waren auf Verladebänder für die Beschickung der einzelnen nebeneinander vor denVerladestellen angeordneten Transporteinheiten gefördert werden. Vorzugsweise werden mehrere nebeneinander angeordnete Verladestellen über ein im wesentlichen in Längsrichtung des Förderbandes verfahrbares Verladeband beschickt. Demzufolge ist beim erfindungsgemäßen Verfahren zumindest ein Hauptförderband vorgesehen, über welches die Waren aus der Produktion in die Bestückungs- und Verladeeinrichtung gefördert werden, von wo aus die Waren dann über die Verladebänder den einzelnen Verladestellen entsprechend der geforderten Konfektionierung in den Transporteinheiten gefördert werden.

Das Bestücken und Verladen der Transporteinheiten wird vorzugsweise von einem Zentralrechner gesteuert, wobei die Waren und / oder die Transporteinheiten mit vom Rechner lesbaren Kennzeichnungen versehen sind, die eine schnelle und zuverlässige Standort- und Füllstandsbestimmung sowie Identifikation der Waren ermöglichen. Beispielsweise können die palettierten Waren und / oder Paket- und / oder Rollenwaren mit Strichcodes versehen sein, die mit einem Strichcodelaser im Bereich der Bestückungs- und Verladeinrichtung gelesen werden, so daß die Waren entsprechend ihrer spezifischen Eigenschaften der entsprechenden Transporteinheit zugeführt werden. Über den Rechner können sowohl der Portalkran als auch die Verladebänder dahingehend gesteuert werden, daß die entsprechende Transporteinheit der entsprechenden Verladestelle zugeordnet wird, insbesondere dann, wenn die Transporteinheit zuvor zumindest teilweise mit entsprechenden Waren bestückt worden ist, die der Transporteinheit entnommen und einer anderen Transporteinheit zugeführt werden soll.

Eine Weiterbildung der erfindungsgemäßen Vorrichtung sieht vor, daß die Horizontalebenen treppenförmig versetzt zueinander angeordnet sind. Demzufolge können beispielsweise ebenerdig mehrere Verladestellen nebeneinander angeordnet sein, wobei oberhalb der Verladestellen eine weitere Ebene vorgesehen ist, auf der wiederum Transporteinheiten vor entsprechenden Verladestellen abstellbar sind.

Es hat sich hierbei als vorteilhaft erwiesen, die Horizontalebenen an einer Längsseite eines Gebäudes anzuordnen, so daß der Dachbereich der ebenerdigen Verladestellen als Stellfläche für die darüber angeordneten Verladestellen genutzt werden kann. Diese Konstruktion kann mehrere Horizontalebenen umfassen, wobei sich zwei Horizontalebenen aufgrund der Gebäudehöhe als vorteilhaft erwiesen haben.

Eine Vergrößerung der Verladekapazität kann in einfacher Weise dadurch erzielt werden, daß die Horizontalebenen an beiden Längsseiten eines Gebäudes angeordnet sind. Hierdurch können beispieslweise vier Stellflächen für Transporteinheiten vorgesehen sein, ohne die konstruktive Höhe des Gebäudes wesentlich zu vergrößern. Somit ist das Gebäude von seinen beiden Längsseiten aus zugänglich, wobei es sich als vorteilhaft erwiesen hat, entweder den Portalkran derart auszubilden, daß er das gesamte Gebäude samt einer aufgenommenen Transporteinheit überfahren kann, oder zwei Portalkräne, jeweils einen Portalkran für eine Längsseie des Gebäudes, vorzusehen, wobei dann auch zwei Bevorratungseinrichtungen im Bereich vor den Verladestellen notwendig sind.

Die Verladestellen sind vorzugsweise über Verladebänder mit zumindest einem an die Produktion angebundenen Förderband verbunden. Mehrere Verladestellen weisen vorzugsweise ein gemeinsames, vorzugsweise in Längsrichtung des Förderbandes verfahrbares Verladeband auf. Hieraus ergeben sich insbesondere Vorteile hinsichtlich der Anlagekosten der erfindungsgemäßen Vorrichtung. Die Verladebänder sind nach einem weiteren Merkmal der erfindungsgemäßen Vorrichtung reversierbar, so daß die Verladebänder nicht nur zum Beladen, sondern auch zum Entladen der Transporteinheiten eingesetzt werden können. Hierdurch ist es möglich, daß nicht sofort verschickte Waren in Transporteinheiten bevorratet werden, die dann bei Bedarf aus den Transporteinheiten herausgefördert und in andere Transporteinheiten gefördert werden können.

Schließlich ist nach einem weiteren Merkmal der Erfindung vorgesehen, daß die Verladestellen bis auf das Niveau der entsprechenden Horizontalebene offen ausgebildet sind und vorzugsweise ein Tor aufweisen. Durch diese Ausgestaltung wird der Vorteil erzielt, daß die Transporteinheiten, nämlich die Wechselbrücken ohne Stützen flach auf die Horizontalebenen aufgesetzt werden können.

Weitere Merkmale und Vorteile der Erfindung ergeben sich aus der nachfolgenden Beschreibung der zugehörigen Zeichnung, in der eine bevorzugte Ausführungsform einer erfindungsgemäßen Vorrichtung dargestellt ist, anhand welcher das erfindungsgemäße Verfahren erläutert werden soll.

In der Zeichnung zeigen:
- Fig. 1: eine Produktions- und Bestückungs- und Verladevorrichtung in Draufsicht und
- Fig. 2: die Bestückungs- und Verladevorrichtung gemäß Fig. 1 in perspektiv dargestellter Ansicht.

In einer Produktionshalle 1 sind zwei Kupolöfen 2 nebeneinander angeordnet, in welchen mineralisches Gestein aufgeschmolzen und anschließend zerfasert wird. Die einzelnen Fasern werden dann mit chemischen Zusatzstoffen, wie Bindemitteln benetzt und auf zwei parallellaufenden Förderbändern 3 und 4 abgelegt. Auf diesen Förderbändern 3 und 4 härten die Bindemittel aus, wobei die Aushärtung im Bereich eines Härteofens erfolgt, durch welchen die endlosen Faserstränge geführt werden. Darüberhinaus kann vorgesehen sein, daß die Faserstränge mechanisch bearbeitet werden, beispielsweise komprimiert werden. Ferner sind weitere Bearbeitungsschritte möglich, insbesondere das Schneiden der auf den Förderbändern 3 und 4 abgelegten Fasermatten in einzelne Abschnitte.

Das Förderband 4 weist an seinem dem Kupolofen gegenüberliegenden Ende einen Palettenstapler 5 auf, welcher dazu dient, die einzelnen Mineralwolleplatten auf Paletten zu schichten, um sie anschließend in einer der Produktionshalle angegliederten Lagerhalle 6 zu stapeln. Die Lagerhalle 6 weist an einer ihrer Längsseiten Verladestationen 7 auf, welche in Form von Rampen ausgebildet sind, an die Lastkraftwagen heranfahren können, um mit den aus der Lagerhalle 6 entnommenen Paletten beladen zu werden.

Ferner weist das Förderband 4 einen Übergang auf ein Förderband 8 auf, welches das Förderband 4 mit einer Kommissionierstation 9 verbindet, die im Bereich eines Ausgangs der Produktionshalle 1 angeordnet ist. Die Kommissionierstation 9 weist einerseits eine Entnahmestelle 10 sowie eine Aufgabestelle 11 auf, die für Waren, d. h. Mineralwolleprodukte vorgesehen sind, die entweder in der Lagerhalle 6 zwischengelagert werden sollen oder die aus der Lagerhalle 6 entnommen und auf ein Kommissionierband 12 aufgegeben werden sollen. Ferner sieht die Kommissionierstation 9 eine Handabnahme 13 vor, welche der Entnahmestelle 10 bzw. der Aufgabestelle 11 gegenüberliegend an der Kommissionierstation 9 angeordnet ist.

Neben dem Förderband 8 ist auch das Förderband 3 an die Kommissionierstation 9 angeschlossen, so daß die in beiden Kupolöfen 2 bzw. auf beiden Förderbändern 3 und 4 hergestellten bzw. abgelegten Waren der Kommissionierstation 9 zugeführt werden können. Abgangsseitig sind an die Kommissionierstation 9 zwei Förderbänder 14 und 15 sowie das bereits erwähnte Kommissionierband 12 angeschlossen. Das Förderband 14 stellt hierbei die Fortsetzung des Förderbandes 3 und das Förderband 15 die Fortsetzung des Förderbandes 4 dar. Sowohl die Förderbänder 14 und 15 als auch das Kommissionierband 12 verbinden die Produktionshalle 1 mit einem als Bestückungs- und Verladeeinrichtung ausgebildeten Gebäude 16, welches nachfolgend noch beschrieben wird.

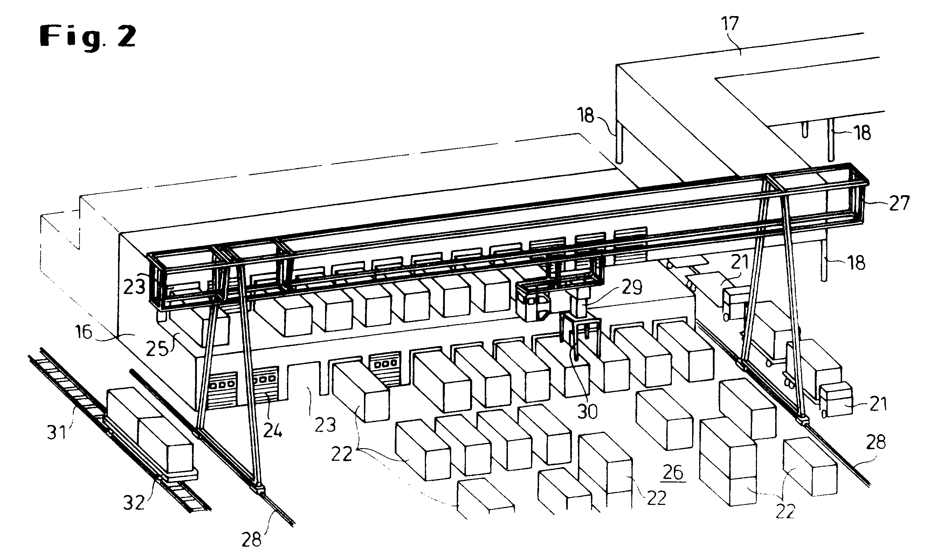

Die Förderbänder 14 und 15 sowie das Kommissionierband 12 sind in einem Brückengebäude 17 angeordnet, welches beispielsweise auf Brückenpfeilern 18 (Fig. 2) aufgeständert ist und somit eine Straße 19 für den öffentlichen Verkehr und eine Beladestraße 20 für Lastkraftwagen 21 überqueren kann.

Das Kommissionierband 12 dient insbesondere dazu, Produkte unterschiedlicher Ausgestaltung für eine Kommission eines Kunden aufzunehmen, so daß die unterschiedlichen Produkte über ein Förderband, nämlich das Kommissionierband 12 dem Gebäude 16 zugeführt werden, von wo aus die Waren in als Wechselbrücken 22 ausgebildeten Transportmitteln verladen werden.

In Fig. 2 ist das Gebäude 16 detalliert dargestellt. Das Gebäude 16 weist an seiner einen Längsseite mehrere Verladestellen 23 auf, die jeweils als Toröffnungen ausgebildet und jeweils mit einem Rolltor 24 verschließbar sind. Jede Toröffnung ist derart ausgebildet, daß sie bis auf die Bodenebene einer unteren Horizontalebene reicht. Vor die Verladestellen 23 können die Wechselbrücken 22 gestellt werden. Oberhalb der unteren Horizontalebene ist eine zweite Horizontalebene 25 gebildet, die auf einem Dach des Gebäudes 16 angeordnet ist. Diese Horizontalebene 25 weist ebenfalls eine Vielzahl von Verladestellen 23 auf, die entsprechend den Verladestellen 23 der unteren Horizontalebene ausgebildet sind. Die Wechselbrücken 22, welche von den Lastkraftwagen 21 abgenommen werden, können somit sowohl vor die Verladestellen 23 der unteren Horizontalebene oder vor die Verladestellen 23 der zweiten, oberen Horizontalebene 25 positioniert werden. Demzufolge ist das Gebäude 16 im Querschnitt treppenförmig ausgebildet, wobei in Fig. 2 gestrichelt eine zweite Hälfte des Gebäudes 16 angedeutet ist, welche in modularer Bauweise das Gebäude 16 dahingehend ergänzt, daß auf beiden Längsseiten des Gebäudes 16 eine entsprechende Anzahl von Verladestellen 23 in zwei Horizontalebenen angeordnet sind.

Im Bereich vor den Verladestellen 23 der unteren Horizontalebene ist eine Bevorratungseinrichtung 26 in Form einer ebenen Fläche bzw. eines Abstellplatzes ausgebildet. Auf dieser Bevorratungseinrichtung 26 können solche Wechselbrücken 22 bevorratet werden, welche nicht sofort vor eine Verladestelle 23 positionierbar sind. Diese Wechselbrücken 22 werden sowohl in leerem als auch in teilweise oder vollständig gefülltem Zustand auf der Bevorratungseinrichtung 26 angeordnet, so daß leere Wechselbrücken 22 bei Bedarf vor eine Verladestelle 23 positioniert werden können. Andererseits können teilweise oder vollständig befüllte, auf der Bevorratungseinrichtung 26 abgestellte Wechselbrücken 22 ebenfalls bei Bedarf in den Bereich der Verladestellen 23 verfahren werden, um die in diesen Wechselbrücken 22 zwischengelagerten Produkte aus diesen Wechselbrücken 22 zu entnehmen und in eine andere Wechselbrücke 22 zu fördern.

Es ist zu erkennen, daß die Wechselbrücken 22 im Bereich der Bevorratungseinrichtung 26 in gleichmäßigen Abständen neben- und hintereinander angeordnet werden, und daß die Wechselbrücken 22 auch übereinandergestapelt werden.

Zum Transport der Wechselbrücken 22 zwischen den Lastkraftwagen 21 und den Verladestellen 23 bzw. der Bevorratungseinrichtung 26 bzw. von der Bevorratungseinrichtung 26 zu den Verladestellen 23 und retour ist ein Portalkran 27 vorgesehen, der parallel zu den Schmalseiten des Gebäudes 16 auf Schienen 28 verfahrbar ist und eine Laufkatze 29 mit einem Spreader 30 aufweist. Der Portalkran 27 kann somit sämtliche Punkte im Bereich der Bevorratungseinrichtung 26 als auch sämtliche Verladestellen 23 sowie die LKW-Entlade- und Beladestelle im Bereich der Beladestraße 20 erreichen. Darüberhinaus ist ein Bahnanschluß 31 vorgesehen, auf welchem schienengebundene Fahrzeuge 32 verfahrbar sind, die mit den Wechselbrücken 22 beladen werden können. Auch diesen Bereich des Bahnanschlusses 31 kann der Portalkran 27 mit Wechselbrücken 22 bedienen.

Bei der in der Fig. 2 gestrichelt dargestellten doppelseitigen Ausführung des Gebäudes 16 kann darüberhinaus vorgesehen sein, daß der Portalkran das gesamte Gebäude 16 überfährt, so daß nur eine Bevorratungseinrichtung 26 auf einer Seite des Gebäudes 16 für beide Längsseiten mit Verladestellen 23 notwendig ist. In diesem Fall ist der Anschluß des Brückengebäudes 17 an das Gebäude 16 unterhalb der Schienen 28 des Portalkrans 27 angeordnet.

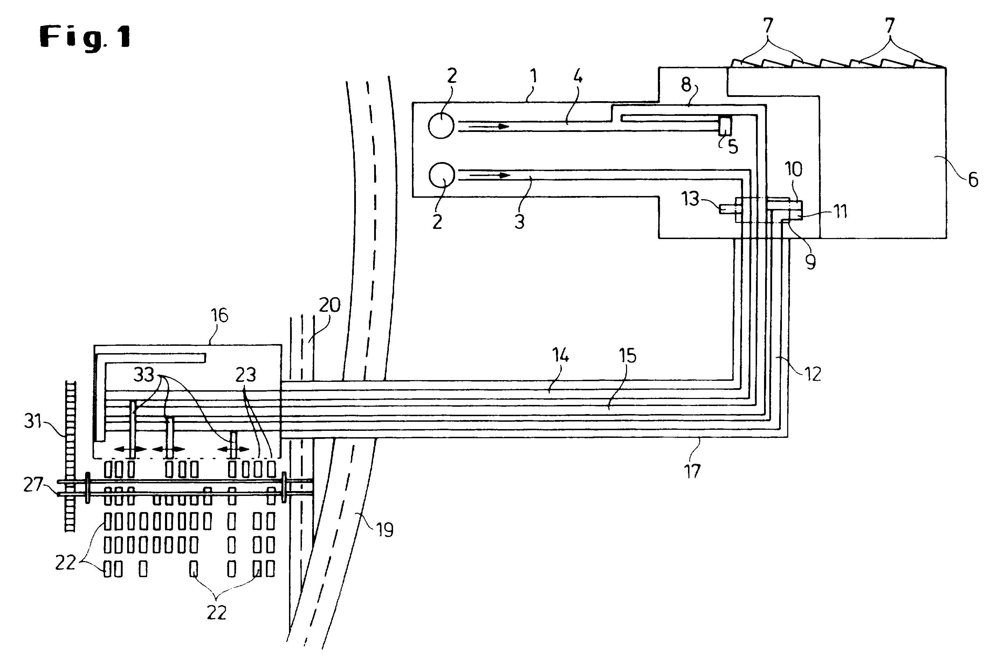

Wie aus Fig. 1 zu erkennen ist, sind die beiden Förderbänder 14 und 15 sowie das Kommissionierband 12 über rechtwinklig zu diesen Bänder 14, 15, 12 verlaufende Verladebänder 33 mit den Verladestellen 23 verbunden. Diese Verladebänder 23 sind in Längsrichtung der Förderbänder 14, 15 und des Kommissionierbandes 12 innerhalb des Gebäudes 16 verfahrbar, so daß die Verladestellen 23 einer Horizontalebene von den einzelnen Verladebändern 33 angefahren werden können.

Bei der voranstehend beschriebenen Ausführungsform einer Produktionsanlage mit einer Bestückungs- und Verladevorrichtung steht insbesondere im Vordergrund, daß der Portalkran 27 alle Bewegungen der Wechselbrücken 22 ausführt. Wechselbrücken 22 ankommender Lastkraftwagen 21 werden von dem Portalkran 27 abgehoben und entweder in den Bereich der Bevorratungseinrichtung 26 oder direkt vor eine Verladestelle 23 verfahren. Die Wechselbrücken 22 werden hierbei nicht auf ihre Wechselbrückenbeine gestellt, sondern flach auf eine dafür vorgesehene Stellfläche, nämlich entweder im Bereich der Verladestellen 23 oder im Bereich der Bevorratungseinrichtung 26. Die in der Bevorratungseinrichtung 26 vorgehaltenen Wechselbrücken 22 werden je nach Bedarf vor die Verladestellen 23 auf einer der beiden Horizontalebenen, beispielsweise die Horizontalebene 25 transportiert. Die Logistik der Bewegungen der Wechselbrücken 22 wird von einem Rechner gesteuert, so daß die Bewegungen des Portalkrans 27 im Hinblick auf die Bewegungen der Wechselbrücken 22 optimierbar ist, um die Fahrwege des Portalkrans 27 zu verkürzen.

Die vor den Verladestellen 23 angeordneten Wechselbrücken 22 werden dann mit Mineralwolleprodukten beladen, die über die Förderbänder 14 und 15 bzw. das Kommissionierband 12 in das Gebäude 16 gefördert werden. Nachdem eine Wechselbrücke 22 mit den erforderlichen Mineralwolleprodukten befüllt ist, wird diese Wechselbrücke 22 mit dem Portalkran 27 auf einen wartenden Lastkraftwagen 21 aufgesetzt. Hierbei ergeben sich Tauschzeiten für zwei Wechselbrücken 22 eines Lastzuges im Bereich von 10 bis 15 Minuten.

Das Gebäude 16 ist derart ausgebildet, daß die Verladestellen 23 der unteren Ebene ebenerdig gebaut sind und daß keine Rampen für die Wechselbrücken 22 notwendig sind. Desweiteren weist das Gebäude 16, wie bereits ausgeführt, zwei Stufen, d. h. zwei Horizontalebenen auf, wobei das Gebäude 16 sowohl hinsichtlich seiner Längsseiten als auch seiner Schmalseiten in einfacher Weise ergänzt bzw. verlängert werden kann.

Die Mineralwolleprodukte werden demzufolge aus dem Produktionsbereich direkt dem Gebäude 16 zugeführt, von wo aus sie direkt in die Wechselbrücken 22 transportiert werden. Mineralwolleprodukte, welche nicht sofort verladen werden bzw. zum Kunden transportiert werden, werden ebenfalls in Wechselbrücken 22 eingeladen, welche Wechselbrücken 22 anschließend in Bereiche der Bevorratungseinrichtung 26 zwischengelagert werden. Bei Bedarf werden diese zwischengelagerten Wechselbrücken 22 wieder in den Bereich einer Verladestelle 23 transportiert, wo sie mit den reversierbar ausgebildeten Verladebändern 33 entleert werden können.

Durch die erfindungsgemäße Ausgestaltung des Gebäudes 16 werden erhebliche Baukosten gespart, da auf Rampen und Überfahrbrücken od. dgl. verzichtet werden kann. Die treppenförmige und doppelstöckige Verladung hat den Vorteil, daß das Gebäude 16 gegenüber üblich ausgebildeten Gebäuden mit gleicher Anzahl Verladestellen 23 erheblich kleiner ist, so daß die Manipulationswege des Portalkrans 27 verkürzt und die Förderstrecken in der Verladestation reduziert werden.

Der Materialfluß von der Produktionshalle 1 bis zur Verladestation werden von einem Zentralrechner gesteuert, so daß der gesamte Warenfluß als auch die Bewegungen des Portalkrans 27 zwischen der Bevorratungseinrichtung 26 und den Verladestellen 23 bzw. zwischen dem Bahnanschluß 31 und der Beladestraße 20 optimiert werden. Der direkte Warenfluß von der Produktionshalle in die Wechselbrücken 22 hat ferner den Vorteil, daß erhebliche Kosteneinsparungen möglich sind. Die Warenflußsteuerung erfolgt vorzugsweise über ein Strichcode-System, welche die Verladesicherheit erhöht, d. h., daß das richtige Produkt in der richtigen Quantität, in der richtigen Ladereihenfolge etc. verladen wird, so daß sich die Falsch- und Fehlverladungen reduzieren. Hierdurch wird der Lieferservice für die Kunden verbessert.

## Patentansprüche

1. Verfahren zum Bestücken und Verladen von auf Transportmedien, wie Lastkraftwagen und / oder schienengebundenen Fahrzeugen, Schiffen od. dgl. auf- und absetzbaren Transporteinheiten, beispielsweise Wechselbrücken, Containern od. dgl., bei welchem zu kommissionierende Waren, insbesondere palettierte Ware, Paket- und / oder Rollenware, vorzugsweise großvolumiger Ausgestaltung, wie Steinwolleprodukte od. dgl. ohne Zwischenlagerung der Produktion entnommen und einer Bestückungs- und Verladeeinrichtung zuge-führt wird, in welcher die Waren direkt in die Transporteinheiten gefördert werden, wobei die Transporteinheiten in zumindest zwei übereinander angeordneten Horizontalebenen angeordnet und bestückt werden.

2. Verfahren nach Anspruch 1,
**dadurch gekennzeichnet**,
daß die Transporteinheiten in einer Bevorratungseinrichtung vorgehalten und nach Bedarf der Bestückungs- und Verladeeinrichtung zugeführt werden.

3. Verfahren nach Anspruch 2,
**dadurch gekennzeichnet**,
daß die Transporteinheiten sowohl im leeren als auch im zumindest teilweise gefüllten Zustand der Bevorratungseinrichtung vorgehalten werden.

4. Verfahren nach Anspruch 2,
**dadurch gekennzeichnet**,
daß die Transporteinheiten in regelmäßigen Abständen zueinander und übereinander gestapelt vorgehalten werden.

5. Verfahren nach Anspruch 2,
**dadurch gekennzeichnet**,
daß die Transporteinheiten mit einer vorzugsweise als Portalkran ausgebildeten Hub- und Versetzeinrichtung zwischen der Bestückungs- und Verladeeinrichtung und der Bevorratungseinrichtung hin- und herbewegt bzw. auf die Transportfahrzeuge verladen werden.

6. Verfahren nach Anspruch 1,
**dadurch gekennzeichnet**,
daß die Transporteinheiten, nämlich die Wechselbrücken sowohl im Bereich der Bevorratungseinrichtung als auch im Bereich der Bestückungs- und Verladeeinrichtung ebenerdig, d. h. ohne aufgeklappte Stützen abgestellt werden.

7. Verfahren nach Anspruch 1,
**dadurch gekennzeichnet**,
daß die Waren in die Bestückungs- und Verladeeinrichtung über Förderbänder in die verschiedenen Horizontalebenen gefördert werden, von welchen Förderbändern die Waren auf Verladebänder für die Beschickung der vor einzelnen nebeneinander angeordneten Verladestellen angeordneten Transporteinheiten gefördert werden.

8. Verfahren nach Anspruch 7,
**dadurch gekennzeichnet**,
daß mehrere nebeneinander angeordnete Verladestellen über ein im wesentlichen in Längsrichtung des Förderbandes verfahrbares Verladeband beschickt werden.

9. Verfahren nach Anspruch 1,
**dadurch gekennzeichnet**,
daß das Bestücken und Verladen der Transporteinheiten von einem Zentralrechner gesteuert wird, wobei die Waren und / oder die Transporteinheiten mit vom Rechner lesbaren Kennzeichnungen versehen sind, die eine schnelle und zuverlässige Standort- und Füllstandsbestimmung sowie Identifikation der Waren ermöglichen.

10. Vorrichtung zum Bestücken und / oder Verladen von auf Transportfahrzeugen, wie Lastkraftwagen (21) und schienengebundenen Fahrzeugen (32) auf- und absetzbaren Transporteinheiten, beispielsweise Wechselbrücken (22), Containern od. dgl. zur Durchführung des Verladens nach Anspruch 1, wobei zu kommissionierende Waren, insbesondere palettierte Ware, Paket- und / oder Rollenware, vorzugsweise großvolumiger Ausgestaltung, wie Steinwolleprodukte, den Transporteinheiten zugeführt werden,
**gekennzeichnet durch**
mehrere in zumindest in zwei übereinanderliegend angeordneten Horizontalebenen (25) vorgesehene Verladestellen (23), vor denen die Transporteinheiten abstellbar sind.

11. Vorrichtung nach Anspruch 10,
**dadurch gekennzeichnet**,
daß die Horizontalebenen (25) treppenförmig versetzt zueinander angeordnet sind.

12. Vorrichtung nach Anspruch 10,
**dadurch gekennzeichnet**,
daß die Horizontalebenen (25) an einer Längsseite eines Gebäudes (16) angeordnet sind.

13. Vorrichtung nach Anspruch 10,
**dadurch gekennzeichnet,**
daß die Horizontalebenen (25) an beiden Längsseiten eines Gebäudes (16) angeordnet sind.

14. Vorrichtung nach Anspruch 10,
**gekennzeichnet durch**
eine der Vorhaltung der Transporteinheiten dienenden Bevorratungseinrichtung (26).

15. Vorrichtung nach Anspruch 10,
**dadurch gekennzeichnet**,
daß die Verladestellen (23) über Verladebänder (33) mit zumindest einem an die Produktion angebundenen Förderband (14, 15, 12) verbunden sind.

16. Vorrichtung nach Anspruch 15,
**dadurch gekennzeichnet**,
daß mehrere Verladestellen (23) ein gemeinsames, vorzugsweise in Längsrichtung des Förderbandes (14, 15, 12) verfahrbares Verladeband (33) aufweisen.

17. Vorrichtung nach Anspruch 15,
**dadurch gekennzeichnet**,
daß die Verladebänder (33) reversierbar sind.

18. Vorrichtung nach Anspruch 10,
**gekennzeichnet durch**
drei zuführende Förderbänder (14, 15, 12), von denen ein Förderband (12) als Kommissionierband ausgebildet ist.

19. Vorrichtung nach einem der Ansprüche 10 bis 18,
**gekennzeichnet durch**
einen Portalkran (27), der die Transporteinheiten von den Fahrzeugen (21, 32) abhebt und zur Bevorratungseinrichtung (26) und / oder den Verladestellen (23) bzw. von den Verladestellen (23) zur Bevorratungseinrichtung (26) und / oder den Fahrzeugen (21, 32) fördert.

20. Vorrichtung nach Anspruch 10,
**dadurch gekennzeichnet**,
daß die Verladestellen (23) bis auf das Niveau der entsprechenden Horizontalebene (25) offen ausgebildet sind und vorzugsweise ein Tor (24) aufweisen.

## Claims

1. Process for loading and shipping transport units, for example interchangeable platforms, containers or the like, that can be placed upon and put down from transportation means such as trucks and/or track-bound vehicles, ships or the like, in which process goods to be commissioned, in particular palletised goods, packets of goods and/or rolls of goods, preferably of the large volume type such as mineral wool products or the like, are withdrawn from the production, without intermediate storage, and are supplied to a loading and shipping installation in which the goods are directly conveyed into the transport units, said transport units being arranged and loaded in at least two superposed horizontal planes.

2. Process according to claim 1, **characterised in** that said transport units are kept in stock in a stock facility and are supplied at need to the loading and shipping installation.

3. Process according to claim 2, **characterised in** that the transport units are kept in stock in the stock facility both in the empty and in the at least partly filled condition.

4. Process according to claim 2, **characterised in** that the transport units are kept in stock in a fashion regularly spaced from one another and stacked on top of each other.

5. Process according to claim 2, **characterised in** that the transport units are moved to-and-fro between the loading and shipping installation and the stock facility or are loaded to the transportation vehicles by means of a lifting and shifting device which is preferably in the form of a portal crane.

6. Process according to claim 1, **characterised in** that the transport units, i.e. the interchangeable platforms, are put down at ground level, i.e. without swung-out supports, both in the area of the stock facility and in the area of the loading and shipping installation.

7. Process according to claim 1, **characterised in** that the goods are conveyed to the various horizontal planes in the loading and shipping installation by means of conveyor belts from which the goods are conveyed to loading belts for loading the transport units arranged in front of individual loading stations provided in a side-by-side arrangement.

8. Process according to claim 7, **characterised in** that plural loading stations which are arranged side by side are loaded via a loading belt which is movable substantially in the longitudinal direction of the conveyor belt.

9. Process according to claim 1, **characterised in** that the loading and shipping of the transport units is controlled by a central processor, the goods and/or the transport units being provided with identification markings that can be read by the processor and that allow for a quick and reliable determination of the location and the filling level as well as identification of the goods.

10. Device for loading and/or shipping transport units, for example interchangeable platforms (22), containers or the like, adapted to be placed upon and taken down from transportation vehicles such as trucks (21) and track-bound vehicles (32), for carrying out the shipping process according to claim 1, wherein goods to be commissioned, particularly palletised goods, packets of goods and/or rolls of goods, preferably of the large volume type such as mineral wool products, are supplied to said transport units, **characterised by** plural loading stations (23) which are provided in at least two superposed horizontal planes (25) and in front of which said transport units can be parked.

11. Device according to claim 10, **characterised in** that said horizontal planes (25) are mutually staggered like stairs.

12. Device according to claim 10, **characterised in** that the horizontal planes (25) are arranged on one longitudinal side of a building (16).

13. Device according to claim 10, **characterised in** that said horizontal planes (25) are arranged on both longitudinal sides of a building (16).

14. Device according to claim 10, **characterised by** a stock facility (26) which serves for keeping said transport units in stock.

15. Device according to claim 10, **characterised in** that the loading stations (23) are connected by means of loading belts (33) to at least one of the production-linked conveyor belts (14, 15, 12).

16. Device according to claim 15, **characterised in** that plural loading stations (23) have a common loading belt (33) which preferably is movable in the longitudinal direction of the conveyor belt (14, 15, 12).

17. Device according to claim 15, **characterised in** that the loading belts (33) are reversible.

18. Device according to claim 10, **characterised by** three supplying conveyor belts (14, 15, 12) of which one conveyor belt (12) is devised as a commissioning belt.

19. Device according to one of the claims 10 to 18, **characterised by** a portal crane (27) which lifts the transport units off the vehicles (21, 32) and transfers them to the stock facility (26) and/or the loading stations (23) or from the loading stations (23) to the stock facility (26) and/or the vehicles (21, 23).

20. Device according to claim 10, **characterised in** that the loading stations (23) are formed open until down to the level of the corresponding horizontal plane (25) and preferably have a gate (24).

## Revendications

1. Procédé pour charger et décharger des unités de transport, par exemple des ponts interchangeables, des containers ou équivalent, pouvant être posées et déposées sur des moyens de transport, tels que des camions et/ou des véhicules sur rails, des navires ou équivalent, pour lequel des marchandises à rassembler et préparer, en particulier des marchandises sur palettes, des marchandises en paquets et/ou rouleaux, de préfération de grand volume comme des produits en laine minérale ou équivalent, sont enlevées de la production sans stockage intermédiaire et sont amenées à un dispositif de chargement et de déchargement dans lequel les marchandises sont transportées directement dans les unités de transport, les unités de transport étant placées et chargées dans au moins deux plans horizontaux superposés.

2. Procédé selon la revendication 1,
caractérisé en ce
que les unités de transport sont stockées dans un dispositif de stockage et sont amenées au besoin au dispositif de chargement et de déchargement.

3. Procédé selon la revendication 2,
caractérisé en ce
que les unités de transport sont stockées aussi bien à l'état vide qu'à l'état partiellement rempli du dispositif de stockage.

4. Procédé selon la revendication 2,
caractérisé en ce
que les unités de transport sont stockées empilées l'une sur l'autre et espacées régulièrement les unes des autres.

5. Procédé selon la revendication 2,
caractérisé en ce
que les unités de transport sont déplacées en va-et-vient entre le dispositif de chargement et le dispositif de déchargement avec un dispositif de levagee et de déplacement configuré comme une grue portique et/ou sont chargées sur les véhicules de transport.

6. Procédé selon la revendication 1,
caractérisé en ce
que les unités de transport, à savoir les ponts interchangeables, sont déposés de plain pied sur le sol, c'est-à-dire sans montants déployés, aussi bien dans la zone du dispositif de stockage que dans la zone du chargement et du déchargement.

7. Procédé selon la revendication 1,
caractérisé en ce
que les marchandises sont transportées dans le dispositif de chargement et de déchargement par des bandes transporteuses dans les différents plans horizontaux, bandes transporteuses à partir desquelles les marchandises sont transportées sur des bandes de déchargement pour alimenter les unités de transport placées devant différents endroits de déchargement placés les uns à côté des autres.

8. Procédé selon la revendication 7,
caractérisé en ce
que plusieurs endroits de déchargement placés les uns à côté des autres sont alimentés par une bande de déchargement déplaçable substantiellement dans le sens longitudinal de la bande transporteuse.

9. Procédé selon la revendication 1,
caractérisé en ce
que le chargement et le déchargement des unités de transport est commandé par un ordinateur central, les marchandises et/ou les unités de transport étant pourvues de caractérisations pouvant être lues par l'ordinateur qui permettent une détermination rapide et fiable de l'emplacement et du niveau de remplissage ainsi qu'une identification des marchandises.

10. Dispositif pour charger et/ou décharger des unités de transport, par exemple des ponts interchangeables (22), des containers ou équivalent, pouvant être posées et déposées sur des véhicules de transport, comme des camions (21) et des véhicules sur rails (32), pour réaliser le déchargement selon la revendication 1, des marchandises à rassembler et préparer, en particulier des marchandises sur palettes, des marchandises en paquets et/ou rouleaux, de préférence de grand volume comme des produits en laine minérale, étant amenées aux unités de transport,
caractérisé par
plusieurs endroits de déchargement (23) prévus au moins dans deux plans horizontaux (25) placés l'un sur l'autre, endroits de déchargement devant lesquels les unités de transport peuvent être déposées.

11. Dispositif selon la revendication 10,
caractérisé en ce
que les plans horizontaux (25) sont placés décalés en forme de gradins l'un par rapport à l'autre.

12. Dispositif selon la revendication 10,
caractérisé en ce
que les plans horizontaux (25) sont placés sur un côté longitudinal d'un bâtiment (16).

13. Dispositif selon la revendication 10,
caractérisé en ce
que les plans horizontaux (25) sont placés sur les deux côtés longitudinaux d'un bâtiment (16).

14. Dispositif selon la revendication 10,
caractérisé par
un dispositif de stockage (26) servant au stockage des unités de transport.

15. Dispositif selon la revendication 10,
caractérisé en ce
que les endroits de déchargement (23) sont reliés par des bandes de déchargement (33) à au moins une bande transporteuse (14, 15, 12) reliée à la production.

16. Dispositif selon la revendication 15,
caractérisé en ce
que plusieurs endroits de déchargement (23) présentent une bande de déchargement commune (33), déplaçable de préférence dans le sens longitudinal de la bande transporteuse (14, 15, 12).

17. Dispositif selon la revendication 15,
caractérisé en ce
que les bandes de déchargement (33) sont réversibles.

18. Dispositif selon la revendication 10,
caractérisé par
trois bandes transporteuses d'alimentation (14, 15, 12) dont l'une (12) est configurée comme une bande pour préparer et rassembler les marchandises.

19. Dispositif selon l'une des revendications 10 à 18,
caractérisé par
une grue portique (27) qui soulève les unités de transport des véhicules (21, 32) et qui les transporte au dispositif de stockage (26) et/ou aux endroits de déchargement (23) et/ou des endroits de déchargement (23) vers le dispositif de stockage (26) et/ou les véhicules (21, 32).

20. Dispositif selon la revendication 10,
caractérisé en ce
que les endroits de déchargement (23) sont configurés ouverts juqu'au niveau du plan horizontal correspondant et présentent de préférence un portail (24).
